# EUROPÄISCHE PATENTSCHRIFT

(11) **EP 3 419 131 B1**
(45) Veröffentlichungstag und Bekanntmachung des Hinweises auf die Patenterteilung: **17.06.2020**
(21) Anmeldenummer: 18166987.0
(22) Anmeldetag: 12.04.2018
(51) Int. Cl.: G05D 23/19, H02G 3/12, H01H 37/00

(54) **ELEKTRISCHES/ELEKTRONISCHES INSTALLATIONSGERÄT**
ELECTRIC/ELECTRONIC INSTALLATION DEVICE
APPAREIL D'INSTALLATION ÉLECTRIQUE/ÉLECTRONIQUE

(30) Priorität: 21.06.2017 DE 102017113644
(43) Veröffentlichungstag der Anmeldung: 26.12.2018
(73) Patentinhaber: Insta GmbH, 58509 Lüdenscheid (DE); Albrecht Jung GmbH & Co. KG, 58579 Schalksmühle (DE)
(72) Erfinder: Stöhr, Axel, 42477 Radevormwald (DE); Hanke, Michael, 58642 Iserlohn (DE); Gerlach, Michael, 44628 Herne (DE); Willer, Mathias, 58553 Halver (DE); Wiesing, Dietmar, 58553 Halver (DE); Gebhardt, Marc, 58579 Schalksmühle (DE)

(56) Entgegenhaltungen:
- DE-B3-102014 103 687
- DE-U1-202016 104 390
- US-A1- 2014 262 481

## Beschreibung

Die vorliegende Erfindung geht von einem gemäß Oberbegriff des Hauptanspruches konzipierten elektrischen/elektronischen Installationsgerät aus, welches hauptsächlich aus einem Einsatz (erstes Funktionsmodul) und einem Aufsatz (zweites Funktionsmodul) besteht.

Derartige Installationsgeräte sind zur Dateneingabe und/oder zur Datenausgabe vorgesehen, und finden oftmals im Zusammenhang mit einem Installationssystem eines Gebäudes Verwendung. Der Einsatz (erstes Funktionsmodul) eines solchen Installationsgerätes ist typischerweise so dimensioniert, dass dieser in eine handelsübliche Installationsdose eingesetzt werden kann. Der Aufsatz (zweites Funktionsmodul) eines solchen Installationsgerätes bildet die sichtseitige Oberfläche und verfügt oftmals über ein Eingabepanel (Frontplatte), über welches dieses Installationsgerät bedient werden kann und/oder weitere Geräte beziehungsweise angeschlossene Aktoren angesteuert werden können. Darüber hinaus kann der Aufsatz auch eine Anzeigeeinheit aufweisen oder insgesamt als Dateneingabeeinheit und Datenausgabeeinheit ausgeführt sein, etwa als Touchscreen-Display. In vielen Fällen weist der Aufsatz zur einfachen Kennzeichnung unterschiedliche Schaltflächen und/oder Piktogramme auf, damit sich dem Benutzer die Bedienung dieses Installationsgerätes auf einfache Art und Weise erschließt.

Durch die DE 10 2014 103 687 B3 ist ein dem Oberbegriff des Hauptanspruches entsprechendes aus einem Einsatz und einem Aufsatz bestehendes elektrisches/elektronische Installationsgerät bekannt geworden. Dieses elektrische/elektronische Installationsgerät weist einen in einer Installationsdose unterzubringenden Einsatz auf, welcher ein erstes Funktionsmodul darstellt und welcher rückseitig mit Verbindungselementen zum Anschluss an ein Installationssystem eines Gebäudes sowie frontseitig mit einem Steckverbinder versehen ist. Der Steckverbinder ist zum Anschluss eines unter Zwischenschaltung eines Designrahmens wandseitig anzuordnenden, als Aufsatz ausgebildeten zweiten Funktionsmodul vorgesehen, wobei im Gehäuseteil des Aufsatzes zumindest eine Leiterplatte angeordnet ist. Der Aufsatz ist mit einem zur Erfassung der Raumtemperatur vorgesehenen ersten Sensorelement bestückbar.

Zudem sind durch die DE 10 2015 101 434 B3 und die DE 20 2016 104 390 U1 jeweils aus einem Einsatz und einem Aufsatz bestehende elektrische/elektronische Installationsgeräte bekannt geworden. Diese elektrischen/elektronischen Installationsgeräte weisen jeweils einen in einer Installationsdose unterzubringenden Einsatz auf, welcher ein erstes Funktionsmodul darstellt und welcher rückseitig mit Verbindungselementen zum Anschluss an ein Installationssystem eines Gebäudes sowie frontseitig mit einem Steckverbinder versehen ist. Der Steckverbinder ist zum Anschluss eines unter Zwischenschaltung eines Designrahmens wandseitig anzuordnenden, als Aufsatz ausgebildeten zweiten Funktionsmodul vorgesehen, wobei im Gehäuseteil des Aufsatzes zumindest eine Leiterplatte angeordnet ist.

Zudem ist durch den Katalog der Firma Albrecht Jung GmbH & Co. KG aus dem Jahre 2003, Seite 372 ein Installationsgerät (Raum-Controller), ausgeführt als sogenanntes "Kompaktgerät" bekannt geworden. Mit einem derart ausgeführten Installationsgerät ist es möglich, für eine Raumtemperaturregelung die dazu notwendige Raumtemperatur zu erfassen. Angesteuert werden mit derartigen Installationsgeräten zum Beispiel Heizungssysteme, wie Fan Coil, Fußbodenheizung, Radiatorheizung und/oder Klimaanlagen. Oftmals ist die mittels derartiger Installationsgeräte die Raumtemperatur jedoch nicht schnell genug beziehungsweise exakt genug ermittelbar.

Außerdem ist durch die US 2014/0262481 A1 ein elektrisches/elektronisches Installationsgerät bekannt geworden, welches zur Ansteuerung von Heizungsanlagen, Ventilatoren und Klimaanlagen vorgesehen ist, bei dem ein oder mehrere Sensorelemente zur Temperaturerfassung vorgesehen werden können. Dieses elektrische/elektronische Installationsgerät weist ein Gehäuse und eine Wandplatte auf, wobei die Wandplatte lösbar mit dem Gehäuse verbindbar ist.

Ausgehend von derart ausgebildeten elektrischen/elektronischen Installationsgeräten liegt der vorliegenden Erfindung die Aufgabe zugrunde, die im Raum vorherrschende Temperatur möglichst schnell und exakt zu ermitteln, um eine bedarfsgerechte Ansteuerung angeschlossener Heizungssysteme, wie Fan Coil, Fußbodenheizung, Radiatorheizung und/oder Klimaanlagen auf besonders einfache Art und Weise zu ermöglichen.

Erfindungsgemäß wird diese Aufgabe durch die im Hauptanspruch angegebenen Merkmale gelöst.

Bei einer derartigen Ausbildung von Installationsgeräten ist besonders vorteilhaft, dass das als Aufsatz ausgebildete zweite Funktionsmodul baukastenartig mit unterschiedlichen, als Einsatz ausgebildeten ersten Funktionsmodulen betrieben werden kann. Das bedeutet, dass zum Beispiel bereits vorhandene Einsätze Verwendung finden können und problemlos auch noch zu entwickelnde Einsätze zur Verwendung kommen können. Zudem ist die Messgenauigkeit der zu ermittelnden Raumtemperatur erhöht, da zur Temperaturerfassung zumindest ein erstes und ein zweites Sensorelement zur Verwendung kommen. Somit ist es möglich, mittels des ersten Sensorelementes die Raumtemperatur und mittels des zweiten Sensorelementes den Wärmeeinfluss des verwendeten Einsatzes zu ermitteln. Eine derartige Ausgestaltung macht es vorteilhafterweise möglich, den Wärmeeinfluss des verwendeten Einsatzes auf einfache Art und Weise bei der Temperaturmessung zu berücksichtigen beziehungsweise mit der ermittelten Raumtemperatur zu verrechnen. Vorteilhafterweise benötigt man somit keinen Temperatursensor im Einsatz, um dessen Wärmeeinfluss zu verrechnen.

Weitere vorteilhafte Ausgestaltungen des erfindungsgemäßen Gegenstandes sind in den Unteransprüchen angegeben. Anhand eines Ausführungsbeispiels sei die Erfindung im Prinzip näher erläutert. Dabei zeigen:

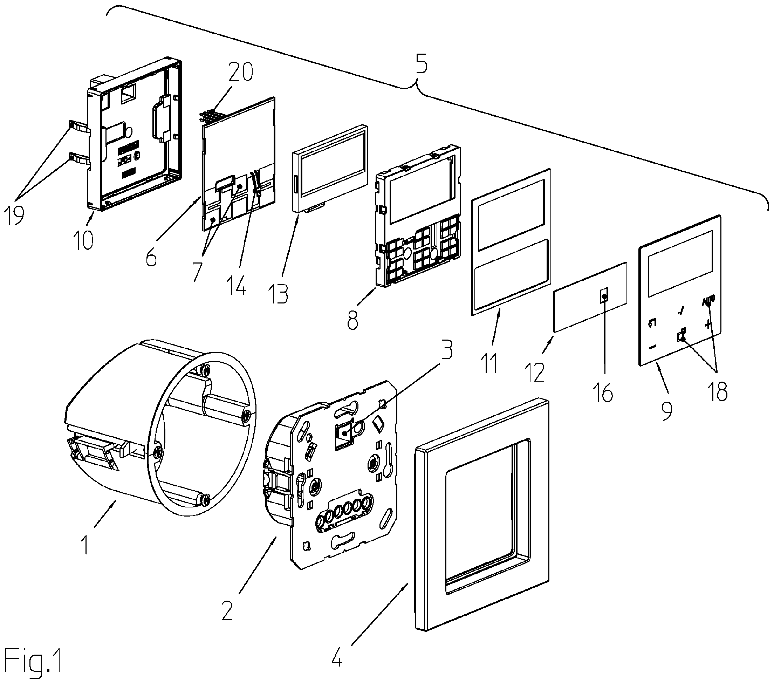

- Fig. 1:: prinziphaft ein elektrischen/elektronischen Installationsgerätes in Zuordnung einer Installationsdose und eines Designrahmens, in Explosionsdarstellung;

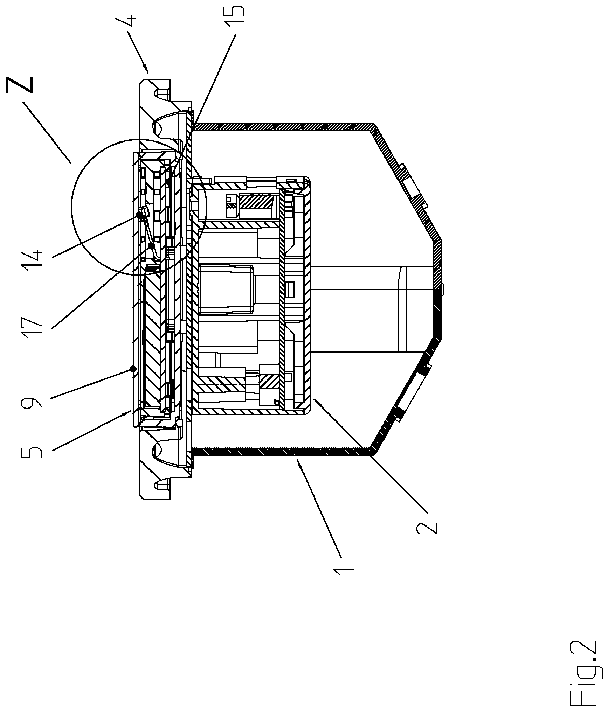

- Fig. 2:: prinziphaft den gemäß Figur 1 ausgeführten Einsatz und einen zugeordneten Aufsatz sowie die Installationsdose als Vollschnitt, im Zusammenbau;

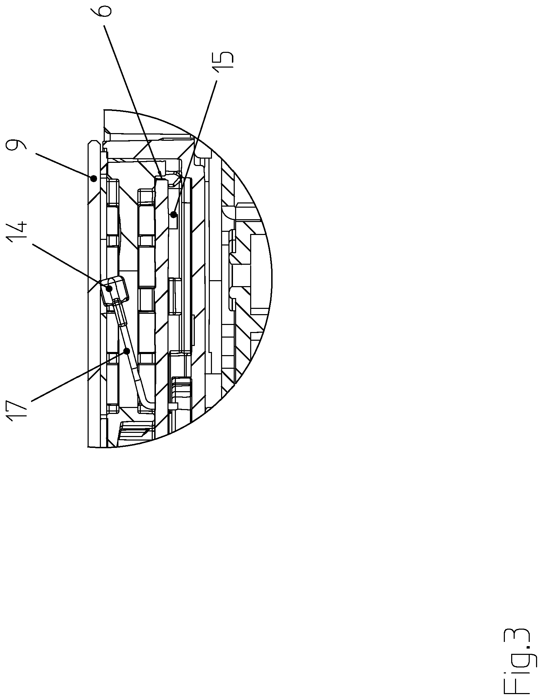

- Fig. 3:: prinziphaft das Detail Z der Figur 2, in vergrößerter Darstellung.

Wie aus den Figuren hervorgeht, besteht ein solches elektrisches/elektronisches Installationsgerät aus einem in einer Installationsdose 1 unterzubringenden, als Einsatz 2 ausgeführten ersten Funktionsmodul, welches rückseitig mit Verbindungselementen zum Anschluss an ein Installationssystem eines Gebäudes sowie frontseitig mit einem Steckverbinder 3 versehen ist, der zum Anschluss eines, unter Zwischenschaltung eines Designrahmens 4 wandseitig anzuordnenden, als Aufsatz 5 ausgebildeten, zweiten Funktionsmodul vorgesehen ist. Im Gehäuseteil 10 des Aufsatzes 5 ist eine Leiterplatte 6 mit mehreren berührungsempfindlichen Sensorflächen 7 angeordnet, wobei die Sensorflächen 7 unter Zwischenschaltung eines mit dem Gehäuseteil 10 verrastbaren Halteteils 8 an der Unterseite einer als Bedienfläche für den Benutzer vorgesehenen Frontplatte 9 zur Anlage kommen. Das Halteteil 8 ist auch zur Festlegung der Leiterplatte 6 im Gehäuseteil 10 vorgesehen. Zwischen dem Halteteil 8 und der Frontplatte 9 ist eine erste Klebedichtung 11 und ist eine zweite Klebedichtung 12 angeordnet. Zudem steht die Leiterplatte 6 funktionstechnisch mit einem Display 13 in Verbindung, welches ebenfalls durch das Halteteil 8 am Gehäuseteil 10 festgelegt und von der Frontplatte 9 abgedeckt wird.

Wie des Weiteren aus den Figuren hervorgeht, ist zur Temperaturerfassung auf der, der Frontplatte 9 zugewandten Oberseite der Leiterplatte 6 ein erstes Sensorelement 14 angeordnet, welches unter Federwirkung an der Unterseite der Frontplatte 9 des Aufsatzes 5 zur Anlage kommt. Zudem ist die, der Frontplatte 9 abgewandte Unterseite der Leiterplatte 6 mit einem, ebenfalls zur Temperaturerfassung vorgesehenen zweiten Sensorelement 15 bestückt.

Damit das erste Sensorelement 14 direkt an der Unterseite der Frontplatte 9 zur Anlage kommen kann, ist in der zweiten Klebedichtung 12 an entsprechender Stelle eine Ausnehmung 16 eingearbeitet. Beim vorliegenden Ausführungsbeispiel steht das erste Sensorelement 14 über ein Zwischenglied 17 mit der Leiterplatte 6 in Verbindung, wobei das Zwischenglied 17 aus zwei Anschlussdrähten besteht. Alternativ ist es durchausmöglich, ein derartiges Zwischenglied zum Beispiel als flexible Leiterplatte oder als flexibel ausgeführten Leiterplattenbereich auszugestalten. Beim vorliegenden Ausführungsbeispiel kommt das erste Sensorelement 14, wie bereits beschrieben, direkt an der Unterseite der Frontplatte 9 zur Anlage. Es kann jedoch auch vorteilhaft sein, das erste Sensorelement 14 unter Zwischenschaltung eines zum Beispiel als Wärmeleitpaste ausgeführten Wärmeleitmittels an der Unterseite der Frontplatte 9 zur Anlage kommen zu lassen.

Die Frontplatte 9 besteht beim vorliegenden Ausführungsbeispiel gänzlich aus Glas und ist rückseitig mit einer Lackschicht versehen, in die sechs Piktogramme 18 als Bedienhilfe für den Benutzer eingebracht sind. Die sechs Piktogramme 18 sind den sechs Sensorflächen 7 gegenüberliegend angeordnet. Selbstverständlich kann die Frontplatte 9 alternativ auch zumindest teilweise aus Kunststoff, Naturstein, Beton, Keramik, Carbon oder dergleichen gefertigt sein.

Zur sicheren Festlegung der Leiterplatte 6 im Innenraum des Gehäuseteils 10 ist, wie bereits beschrieben, das Halteteil 8 vorgesehen, welches Rastelemente aufweist, die rastend mit entsprechenden Elementen des Gehäuseteils 10 in Wirkverbindung treten. Wie ebenfalls bereits erwähnt, ist beim vorliegenden Ausführungsbeispiel ein Display 13 vorgesehen, um den Benutzer auf besonders einfache Art und Weise mit Informationen, wie Uhrzeit, Raumtemperatur, Betätigungsstatus und so weiter zu versorgen. Um für eine zuverlässige, bei Bedarf wiederlösbare Festlegung des Aufsatzes 5 am Einsatz 2 Sorge zu tragen, sind am Einsatz 2 und am Aufsatz 5 miteinander in Wirkverbindung kommende Clipselemente 19 vorhanden. Zudem weist der Einsatz, wie bereits erwähnt, einen Steckverbinder 3 auf, welcher mit an der Leiterplatte 6 angebrachten Steckerstiften 20 des Aufsatzes 5 zusammenwirkt.

Im Gehäuse des Einsatzes 2 sind wärmeerzeugende Funktionsbauteile vorhanden, die zum Beispiel als Relais und/oder Leistungsregler ausgeführt sind, um angeschlossene Aktoren mittels des elektrischen/elektronischen Installationsgerätes bedarfsgerecht ansteuern zu können. Beispielsweise sind im Gehäuse des Einsatzes insbesondere Komponenten der Spannungsversorgung (Netzteil, Schaltregler und so weiter) sowie des Leistungsteils des reglungstechnischen Stellgliedes vorhanden.

Die Wärmeerzeugung kann zum Beispiel durch ohmsche Widerstände insbesondere Übergangswiderstände bei Leistungsrelais bis 16 Ampere hervorgerufen werden. Ferner können Schaltverluste durch Halbleiterschalter (Halbleiterrelais, MOS-FET, TRIAC und so weiter) zu einer Erwärmung des Einsatzes beitragen.

Es ist somit auf besonders einfache Art und Weise ein elektrisches/elektronisches Installationsgerät geschaffen, welches die im Raum vorherrschende Temperatur möglichst schnell und exakt ermittelt, um eine bedarfsgerechte Ansteuerung angeschlossener Heizungssysteme, wie Fan Coil, Fußbodenheizung, Radiatorheizung und/oder Klimaanlagen auf besonders einfache Art und Weise zu ermöglichen. Es sind somit sowohl Regelungen der Raumtemperatur zu Heizzwecken als auch zu Kühlzwecken bedarfsgerecht möglich. Dabei ist besonders vorteilhaft, dass das als Aufsatz 5 ausgebildete zweite Funktionsmodul baukastenartig mit unterschiedlichen, als Einsatz 2 ausgebildeten ersten Funktionsmodulen betrieben werden kann. Das bedeutet, dass zum Beispiel bereits vorhandene Einsätze 2 Verwendung finden können und problemlos auch noch zu entwickelnde Einsätze 2 zur Verwendung kommen können. Zudem ist die Messgenauigkeit der zu ermittelnden Raumtemperatur erhöht, da zur Temperaturerfassung beim vorliegenden Ausführungsbeispiel ein erstes und ein zweites Sensorelement 14, 15 zur Verwendung kommen. Somit ist es möglich, mittels des ersten Sensorelementes 14 die Raumtemperatur und mittels des zweiten Sensorelementes 15 den Wärmeeinfluss des verwendeten Einsatzes 2 zu ermitteln. Eine derartige Ausgestaltung macht es vorteilhafterweise möglich, den Wärmeeinfluss des verwendeten Einsatzes 2 auf einfache Art und Weise bei der Temperaturmessung zu berücksichtigen beziehungsweise mit der ermittelten Raumtemperatur zu verrechnen. Vorteilhafterweise wird somit kein Temperatursensor im Einsatz 2 benötigt, um dessen Wärmeeinfluss zu ermitteln beziehungsweise zu verrechnen.

### Bezuqszeichenliste

- 1: Installationsdose
- 2: Einsatz
- 3: Steckverbinder
- 4: Designrahmen
- 5: Aufsatz
- 6: Leiterplatte
- 7: Sensorflächen
- 8: Halteteil
- 9: Frontplatte
- 10: Gehäuseteil
- 11: Erste Klebedichtung
- 12: Zweite Klebedichtung
- 13: Display
- 14: Erstes Sensorelement
- 15: Zweites Sensorelement
- 16: Ausnehmung
- 17: Zwischenglied
- 18: Piktogramm
- 19: Clipselemente
- 20: Steckerstifte

## Patentansprüche

1. Elektrisches/elektronisches Installationsgerät mit einem in einer Installationsdose (1) unterzubringenden, als Einsatz (2) ausgeführten ersten Funktionsmodul, welches rückseitig mit Verbindungselementen zum Anschluss an ein Installationssystem eines Gebäudes sowie frontseitig mit einem Steckverbinder (3) versehen ist, der zum Anschluss eines, unter Zwischenschaltung eines Designrahmens (4) wandseitig anzuordnenden, als Aufsatz (5) ausgebildeten, zweiten Funktionsmodul vorgesehen ist, wobei der Aufsatz (5) benutzerseitig mit einer Frontplatte (9) versehen ist, wobei im Gehäuseteil (10) des Aufsatzes (5) zumindest eine Leiterplatte (6) angeordnet ist, und wobei der Aufsatz (5) mit einem zur Erfassung der Raumtemperatur vorgesehenen ersten Sensorelement (14) bestückbar ist, **dadurch gekennzeichnet, dass** das zur Raumtemperaturerfassung vorgesehene erste Sensorelement (14) auf der, der Frontplatte (9) zugewandten Oberseite der Leiterplatte (6) angeordnet ist und an der Unterseite der Frontplatte (9) des Aufsatzes (5) zur Anlage kommt, und dass die der Frontplatte (9) abgewandte Unterseite der Leiterplatte (6) mit zumindest einem, ebenfalls zur Temperaturerfassung vorgesehenen und dabei zum Zweck der Erfassung des Wärmeeinflusses des Einsatzes (2) bestimmten zweiten Sensorelement (15) bestückt ist.

2. Elektrisches/elektronisches Installationsgerät nach Anspruch 1, **dadurch gekennzeichnet, dass** die Frontplatte (9) an der Stelle, an der das zumindest eine erste Sensorelement (14) zur Anlage kommt, in seiner Dicke reduziert ausgeführt ist.

3. Elektrisches/elektronisches Installationsgerät nach einem der Ansprüche 1 oder 2, **dadurch gekennzeichnet, dass** das zumindest eine erste Sensorelement (14) über ein Zwischenglied (17) mit der Leiterplatte (6) in Verbindung steht.

4. Elektrisches/elektronisches Installationsgerät nach Anspruch 3, **dadurch gekennzeichnet, dass** zumindest ein Zwischenglied (17) als Anschlussdraht ausgeführt ist.

5. Elektrisches/elektronisches Installationsgerät nach Anspruch 3 oder 4, **dadurch gekennzeichnet, dass** zumindest ein Zwischenglied (17) als flexible Leiterplatte ausgeführt ist.

6. Elektrisches/elektronisches Installationsgerät nach Anspruch 3, 4 oder 5, **dadurch gekennzeichnet, dass** zumindest ein Zwischenglied (17) als flexibel ausgeführter Leiterplattenbereich ausgeführt ist.

7. Elektrisches/elektronisches Installationsgerät nach einem der Ansprüche 1 bis 6, **dadurch gekennzeichnet, dass** das zumindest eine erste Sensorelement (14) unter Federwirkung an der Unterseite der Frontplatte (9) zur Anlage kommt.

8. Elektrisches/elektronisches Installationsgerät nach einem der Ansprüche 1 bis 7, **dadurch gekennzeichnet, dass** zumindest ein erstes Sensorelement (14) unter Zwischenschaltung eines Wärmeleitmittels an der Unterseite der Frontplatte (9) zur Anlage kommt.

9. Elektrisches/elektronisches Installationsgerät nach einem der Ansprüche 1 bis 8, **dadurch gekennzeichnet, dass** die Frontplatte (9) zumindest teilweise als Bedien- und/oder Anzeigefläche ausgeführt ist.

10. Elektrisches/elektronisches Installationsgerät nach einem der Ansprüche 1 bis 9, **dadurch gekennzeichnet, dass** im Gehäuse des Einsatzes (2) zumindest ein wärmeerzeugendes Funktionsbauteil vorhanden ist.

11. Elektrisches/elektronisches Installationsgerät nach einem der Ansprüche 1 bis 10, **dadurch gekennzeichnet, dass** zumindest ein im Gehäuse des Einsatzes (2) vorhandenes Funktionsbauteil als Relais ausgeführt ist.

12. Elektrisches/elektronisches Installationsgerät nach einem der Ansprüche 1 bis 11, **dadurch gekennzeichnet, dass** zumindest ein im Gehäuse des Einsatzes (2) vorhandenes Funktionsbauteil als Leistungsregler ausgeführt ist.

13. Elektrisches/elektronisches Installationsgerät nach einem der Ansprüche 1 bis 12, **dadurch gekennzeichnet, dass** zumindest ein Teil der Frontplatte (9) aus Glas besteht.

14. Elektrisches/elektronisches Installationsgerät nach einem der Ansprüche 1 bis 13, **dadurch gekennzeichnet, dass** zumindest ein Teil der Frontplatte (9) aus Kunststoff besteht.

15. Elektrisches/elektronisches Installationsgerät nach einem der Ansprüche 1 bis 14, **dadurch gekennzeichnet, dass** zumindest ein Teil der Frontplatte (9) aus Naturstein besteht.

16. Elektrisches/elektronisches Installationsgerät nach einem der Ansprüche 1 bis 15, **dadurch gekennzeichnet, dass** zumindest ein Teil der Frontplatte (9) aus Beton besteht.

17. Elektrisches/elektronisches Installationsgerät nach einem der Ansprüche 1 bis 16, **dadurch gekennzeichnet, dass** zumindest ein Teil der Frontplatte (9) aus Keramik besteht.

18. Elektrisches/elektronisches Installationsgerät nach einem der Ansprüche 1 bis 17, **dadurch gekennzeichnet, dass** zumindest ein Teil der Frontplatte (9) aus Carbon besteht.

## Claims

1. Electrical/electronic installation device with a first functional module designed as an insert (2), to be accommodated in an installation box (1), which functional module is provided at the rear with connecting elements for connection to an installation system of a building and at the front with a plug connector (3), which is provided for the connection of a second functional module, which is to be arranged on the wall side with the interposition of a design frame (4) and is designed as an attachment (5), the attachment (5) being provided with a front panel (9) on the user side, at least one printed circuit board (6) being arranged in the housing part (10) of the attachment (5), and wherein the attachment (5) can be equipped with a first sensor element (14) provided for detecting the room temperature, **characterised by the fact** that the first sensor element (14) provided for detecting the room temperature is arranged on the upper side of the printed circuit board (6) facing the front panel (9) and comes to rest against the underside of the front panel (9) of the attachment (5), and by the fact that the underside of the printed circuit board (6) facing away from the front panel (9) is equipped with at least one second sensor element (15) which is likewise provided for temperature detection and at the same time is intended for the purpose of detecting the heat influence of the insert (2).

2. Electrical/electronic installation device in accordance with Claim 1, **characterized by the fact** that the front panel (9) is reduced in thickness at the point where the at least one first sensor element (14) comes to rest.

3. Electrical/electronic installation device in accordance with any of Claims 1 or 2, **characterized by the fact** that the at least one first sensor element (14) is connected to the printed circuit board (6) via an intermediate element (17).

4. Electrical/electronic installation device in accordance with Claim 3, **characterized by the fact** that at least one intermediate element (17) is designed as connection wire.

5. Electrical/electronic installation device in accordance with Claim 3 or 4, **characterized by the fact** that at least one intermediate element (17) is designed as flexible printed circuit board.

6. Electrical/electronic installation device in accordance with Claim 3, 4 or 5, **characterized by the fact** that at least one intermediate element (17) is designed as flexible printed circuit board area.

7. Electrical/electronic installation device in accordance with any of Claims 1 to 6, **characterized by the fact** that the at least one first sensor element (14) comes to rest at the underside of the front panel (9) with spring effect.

8. Electrical/electronic installation device in accordance with any of Claims 1 to 7, **characterized by the fact** that at least one first sensor element (14) comes to rest at the underside of the front panel (9) with interposition of a heat conducting medium.

9. Electrical/electronic installation device in accordance with any of Claims 1 to 8, **characterized by the fact** that the front panel (9) at least partially is designed as operating and/or display surface.

10. Electrical/electronic installation device in accordance with any of Claims 1 to 9, **characterized by the fact** that in the housing of the insert (2) at least one heat generating functional element is installed.

11. Electrical/electronic installation device in accordance with any of Claims 1 to 10, **characterized by the fact** that at least one functional element installed in the housing of the insert (2) is designed as relay.

12. Electrical/electronic installation device in accordance with any of Claims 1 to 11, **characterized by the fact** that at least one functional element installed in the housing of the insert (2) is designed as power controller.

13. Electrical/electronic installation device in accordance with any of Claims 1 to 12, **characterized by the fact** that at least one part of the front panel (9) is made of glass.

14. Electrical/electronic installation device in accordance with any of Claims 1 to 13, **characterized by the fact** that at least one part of the front panel (9) is made of plastic.

15. Electrical/electronic installation device in accordance with any of Claims 1 to 14, **characterized by the fact** that at least one part of the front panel (9) is made of natural stone.

16. Electrical/electronic installation device in accordance with any of Claims 1 to 15, **characterized by the fact** that at least one part of the front panel (9) is made of concrete.

17. Electrical/electronic installation device in accordance with any of Claims 1 to 16, **characterized by the fact** that at least one part of the front panel (9) is made of ceramic.

18. Electrical/electronic installation device in accordance with any of Claims 1 to 17, **characterized by the fact** that at least one part of the front panel (9) is made of carbon.

## Revendications

1. Appareil d'installation électrique/électronique avec un premier module fonctionnel à loger dans une boîte d'installation (1), conçu comme un insert (2), qui est muni à l'arrière d'éléments de connexion pour le raccordement à un système d'installation d'un bâtiment et à l'avant d'un connecteur (3), qui est prévu pour le raccordement d'un deuxième module fonctionnel, conçu comme un accessoire (5), qui doit être disposé côté mur avec interposition d'un cadre design (4), l'accessoire (5) étant muni d'un panneau avant (9) côté utilisateur, au moins une carte à circuit imprimé (6) étant disposée dans la partie de boîtier (10) de l'accessoire (5), et l'accessoire (5) pouvant être équipé d'un premier élément capteur (14) prévu pour détecter la température ambiante, **caractérisé en ce que** le premier élément capteur (14) prévu pour détecter la température ambiante est disposé sur la face supérieure de la carte de circuit imprimé (6) tournée vers le panneau avant (9) et vient s'appuyer contre la face inférieure du panneau avant (9) de l'accessoire (5), et **en ce que** la face inférieure de la carte de circuit imprimé (6) éloignée du panneau avant (9) est équipée d'au moins un deuxième élément capteur (15) qui est également prévu pour la détection de la température et qui est destiné dans ce cas à détecter l'influence thermique de l'insert (2).

2. Appareil d'installation électrique/électronique selon la revendication 1, **caractérisé en ce que** le panneau avant (9) est conçu avec une épaisseur réduite à l'endroit où l'au moins un premier élément capteur (14) vient s'appuyer.

3. Appareil d'installation électrique/électronique selon l'une des revendications 1 ou 2, **caractérisé en ce que** l'au moins un premier élément capteur (14) est relié à la carte de circuit imprimé (6) par un élément intermédiaire (17).

4. Appareil d'installation électrique/électronique selon la revendication 3, **caractérisé en ce qu'**au moins un élément intermédiaire (17) est conçu comme fil de connexion.

5. Appareil d'installation électrique/électronique selon la revendication 3 ou 4, **caractérisé en ce qu'**au moins un élément intermédiaire (17) est conçu comme une carte de circuit imprimé flexible.

6. Appareil d'installation électrique/électronique selon la revendication 3, 4 ou 5, **caractérisé en ce qu'**au moins un élément intermédiaire (17) est conçu comme une zone de carte de circuit imprimé conçue de manière flexible.

7. Appareil d'installation électrique/électronique selon l'une des revendications 1 à 6, **caractérisé en ce que** l'au moins un premier élément capteur (14) vient s'appuyer sur la face inférieure du panneau avant (9) sous l'action d'un ressort.

8. Appareil d'installation électrique/électronique selon l'une des revendications 1 à 7, **caractérisé en ce qu'**au moins un premier élément capteur (14) vient s'appuyer sur la face inférieure du panneau avant (9) avec interposition d'un moyen conducteur de chaleur.

9. Appareil d'installation électrique/électronique selon l'une des revendications 1 à 8, **caractérisé en ce que** le panneau avant (9) est au moins partiellement conçu comme une surface de commande et/ou d'affichage.

10. Appareil d'installation électrique/électronique selon l'une des revendications 1 à 9, **caractérisé en ce qu'**au moins un composant fonctionnel générateur de chaleur est présent dans le boîtier de l'insert (2).

11. Appareil d'installation électrique/électronique selon l'une des revendications 1 à 10, **caractérisé en ce qu'**au moins un composant fonctionnel présent dans le boîtier de l'insert (2) est conçu comme un relais.

12. Appareil d'installation électrique/électronique selon l'une des revendications 1 à 11, **caractérisé en ce qu'**au moins un composant fonctionnel présent dans le boîtier de l'insert (2) est conçu comme un régulateur de puissance.

13. Appareil d'installation électrique/électronique selon l'une des revendications 1 à 12, **caractérisé en ce qu'**au moins une partie du panneau avant (9) est en verre.

14. Appareil d'installation électrique/électronique selon l'une des revendications 1 à 13, **caractérisé en ce qu'**au moins une partie du panneau avant (9) est en matière plastique.

15. Appareil d'installation électrique/électronique selon l'une des revendications 1 à 14, **caractérisé en ce qu'**au moins une partie du panneau avant (9) est en pierre naturelle.

16. Appareil d'installation électrique/électronique selon l'une des revendications 1 à 15, **caractérisé en ce qu'**au moins une partie du panneau avant (9) est en béton.

17. Appareil d'installation électrique/électronique selon l'une des revendications 1 à 16, **caractérisé en ce qu'**au moins une partie du panneau avant (9) est en céramique.

18. Appareil d'installation électrique/électronique selon l'une des revendications 1 à 17, **caractérisé en ce qu'**au moins une partie du panneau avant (9) est en carbone.
